## Europäisches Patentamt

## European Patent Office

## Office européen des brevets

(11) Veröffentlichungsnummer: **0 325 666 A1**

# EUROPÄISCHE PATENTANMELDUNG

(21) Anmeldenummer: 88101115.9

(51) Int. Cl.⁴: **B65G 11/16 , B65G 11/06**

(22) Anmeldetag: 26.01.88

Die Anmeldung wird, wie ursprünglich eingereicht, unvollständig veröffentlicht (Art. 93 (2) EPÜ). Die Stelle der Beschreibung oder der Patentansprüche, die offensichtlich eine Auslassung enthält, ist als Lücke an der entsprechenden Stelle ersichtlich.

(43) Veröffentlichungstag der Anmeldung:
**02.08.89 Patentblatt 89/31**

(84) Benannte Vertragsstaaten:
**DE FR GB**

(71) Anmelder: **Schmelzbasaltwerk Kalenborn Dr.Ing. Mauritz KG**

**D-5461 Kalenborn bei Linz/Rhein(DE)**

(72) Erfinder: **Grüber, Alfons
Beethovenstrasse 48
D-5460 Linz/Rhein(DE)**
Erfinder: **Nonnen, Franz-Albert
Bucherfelderweg 11
D-5467 Vettelschoss 2(DE)**

(74) Vertreter: **Lewald, Dietrich, Dipl.-Ing. et al
Patentanwälte Müller-Boré, Deufel, Schön,
Hertel Lewald, Otto Isartorplatz 6 Postfach 26
02 47
D-8000 München 26(DE)**

(54) **Wendelausbildung, insbesondere in Bergerohren.**

(57) Die Erfindung betrifft eine Wendelausbildung, insbesondere in Bergerohren von 500 mm Durchmesser, die aus einzelnen Stahlrohrschüssen bestehen, mit verschleißfesten Auskleidungen (2), die bodenblechfrei am Stahlrohr (1) befestigt sind. Nach einer vorzugsweisen Ausführungsform der Erfindung sind die verschleißfesten Auskleidungen (2) als an sich nicht schlagunempfindliche, aber hochverschleißfeste mineralische Platten und räumlich gekrümmte Plattenstücke ausgebildet, die, sich gegen die Rohrwand abstützend, als freitragende Elemente in Gummi einvulkanisiert sind.

FIG 3

## Wendelausbildung, insbesondere in Bergerohren

Die Erfindung betrifft eine Wendelausbildung, insbesondere in Bergerohren von 500 mm Durchmesser, die aus einzelnen Stahlrohrschüssen bestehen, mit verschleißfesten Auskleidungen, die bodenblechfrei am Stahlrohr befestigt sind.

Solche Wendelrutschen werden vorwiegend für den Transport von Bergen (bei der Kohlegewinnung zwangsweise mitgefördertes Gestein) und Kohle von einer höheren zur tieferen Ebene eingesetzt. Ein besonderes Anwendungsbeispiel ist der Kohlenbergbau unter Tage für den Transport von einer höher gelegenen Sohle zu einer tiefer liegenden Sohle oder von über Tage auf eine Sohle unter Tage. Der Einsatz erfolgt auch für Kohlewäschen über Tage. Hierbei wird die Spirale in ein Rohr eingebracht. Dar Rohr ist im allgemeinen in Schüsse von je 1500 mm Länge unterteilt.

Auch ist bekannt, durch Stahlrohre von beispielsweise 500 mm Innendurchmesser mit einer integrierten Spirale aus Stahl solche Berge zu fördern. Eingesetzt werden solche sog. Bergefallrohre auch in Schächten von Steinkohlebergwerken. Dort diesen sie zum Transport der Berge auch von der übertätigen Wäsche zur Versatzsohle unter Tage.

Hierbei ist die spiralförmige Rutsche z.B. ausgebildet wie in der Patent P 29 23 945.0.
Hierbei ist die Leitspirale ohne Bodenblech ausgebildet. Die Befestigung dieser Hartgußwendelauflageplatten am Stahlrohr erfolgt mittels Schrauben. Sie werden von der Rohrachse aus durch die Wendelauflageplatten gesteckt. Die Schraubenköpfe schließen mehr oder weniger bündig mit der beanspruchten Oberfläche der Verschleißschutzauflagen ab. Sie liegen auch im Bereich des Förderstroms und unterliegen somit den hohen Verschleißbeanspruchungen. Ein vollständiger Verbrauch der Verschleißschutzauflagen ist nicht möglich, weil die Schraube in ihrem konischen Bereich ein entsprechendes Widerlager an der Metallauflage benötigt. Die Verschleißschutzauflageplatten sind sowohl bei Spiralen mit Bobenblech wie bei den freitragenden Spiralen rechtwinklig, also unter 90° zur Wendelneigung geschnitten. Die Fuge zwischen den einzelnen Platten liegt also nicht horizontal. Das bedeutet, daß an einem Ende des Rohrschusses das Endformstück in einer Dreiecksform über den Rohrflansch hinaussteht; am andere Rohrende ist in der Spirale ein entsprechender Rücksprung in den Verschleißschutzauflagen vorgesehen. Diese vorstehenden Eckteile haben sich beim Transport der ausgekleideten Rohrschüsse als sehr hinderlich erwiesen. Hinzu kommt: wenn ein Rohrschuß aus dem fertig montierten Strang ausgewechselt wird oder ausgewechselt werden muß, so müssen die Verschleißschutzauflagen an den Flanschverbindungen ausgewechselt werden. Anderenfalls läßt sich der Rohrschuß nicht aus dem Strang herausnehmen.

Es ist nicht möglich, die Hartgußwendelauflagen gegen Platten aus mineralischen Werkstoffen einfach auszutauschen. Sind Bodenbleche vorhanden, so müßten auf diese die mineralischen Platten geschraubt werden. Da mineralische Werkstoffe zudem nicht schlagunempfindlich sind, gehen sie dann schnell zu Bruch. Eine freitragende Spirale ohne Bodenblech aus mineralischen Platten kann nicht in der gleichen Weise hergestellt werden wie die freitragende Hartgußwendelspirale. Auch hier steht primär die Bruchempfindlichkeit des mineralischen Werkstoffs im Vordergrund und damit dieser Ausführung entgegen. Zudem gibt es Schwierigkeiten bei der Formgebung aufgrund der Herstellungstechnik.

Der Erfindung liegt die Aufgabe zugrunde, mineralische Verschleißschutzplatten in größerem Umfang für härtere Beanspruchungen, insbesondere auch für Schlagbeanspruchungen, geeignet zu machen und möglichst auf jede Schwächung der Platte aufgrund ihrer Form und Befestigungstechnik zu verzichten.

Erreicht wird dies erfindungsgemäß überraschend einfach dadurch, daß die verschleißfesten Auskleidungen als an sich nicht schlagunempfindliche, aber hochverschleißfeste mineralische Platten und räumlich gekrümmte Plattenstücke ausgebildet sind, die, sich gegen die Rohrwand abstützend, als freitragende Elemente in Gummi einvulkanisiert sind.

Eine solche Wendelausbildung kommt ohne Bodenbleche aus.

Es war überraschend, daß anstelle der bisher aus Teilen der Platte selbst bestehenden Abstützelemente, insbesondere auch von Nocken oder Formteilen, nun über anvulkanisierte Gummiformstücke eine Lösung gefunden werden konnte. Sich mit den Platten, seien es nun solche von mineralischem Aufbau oder Hartgußplatten, verbindende Elastomere sind gegebenenfalls auch geeignet.

Zweckmäßig zeichnen sich die anvulkanisierten Gummiformteile dadurch aus, daß in die anvulkanisierten Gummiformteile Verbindungselemente, insbesondere Vorrichtungen zum Halten hammerkopfähnlicher Schrauben und Gewindebolzen mit angeschweißten, tellerförmigen Scheiben als Verbindung zum Stahlmantel einvulkanisiert und damit in diesen verankert sind.

Erforderlichenfalls sind an besonders schlagbeanspruchten Bereichen der Wendel Hartgußplatten mit anvulkanisierten Gummiformteilen der oben genannten Art anbringbar.

Zweckmäßig sind die Schrauben bei stark zum Inneren des Bergerohres hin gekrümmten Platten so tief einvulkanisiert, daß über der bergerohrseitigen Begrenzung der Befestigungsschiene noch eine ca. 10 mm dicke Gummischicht zur Korrektur der einzelnen Verschleißschutzelemente verbleibt.

Im übrigen Bereich tragen die direkt an die Stahlrohrschußwand, insbesondere prallel angrenzenden Platten, eine an sie anvulkanisierte Gummischicht mit einvulkanisierten Schraubenschaft mit tellerförmigem Fuß.

Überraschend wird erfindungsgemäß nicht nur das Verschleißverhalten verbessert, auch die Bruchgefahr wird eingeschränkt. Zum erstenmal haben diese eben (in Anpassung an den Stahlmantel des Bergerohre) gekrümmten Platten gleicher Dicke oder die räumlich verwundenen Plattenformstücke stark unterschiedlicher Dicke keinerlei Schwächungslöcher für Schrauben oder dergleichen. Damit fällt auch ein Ausbrechen fort.

An den Platten sind also weder die Befestigungslöcher eingegossen, vorgesehen noch werden sie nachträglich vorgesehen. Auch sind keine Befestigungselemente direkt an den Platten angebracht. Beim Anziehen der Schrauben können also die Platten auf keinen Fall zu Bruch gehen.

Trotzdem sind die Platten relativ elastisch mit der Metallstützkonstruktion (Bergerohr) verbunden.

Es wird eine selbsttragende Wendel gebildet, welche zur Rohrwand hin abgestützt wird. Im Gegensatz zur Ausführung mit Bodenblechen wird eine relativ steife praktisch vibrationsfreie Wendel erreicht.

Die Wendelrutschfläche, und dies ist ein weiterer bedeutender Vorteil, wird so ausgebildet, daß sie horizontal bündig mit dem Rohrschuß endet.

Entsprechend den Beanspruchungen wird man eine Kombination aus mineralischen Werkstoffen und Metallgußplatten einsetzen. Im Rohrquerschnitt gesehen z.B.: zur Rohrmitte hin ein Formstück aus Hartguß, die übrigen Formstücke können dann aus einem mineralischen Werkstoff hergestellt sein. Schlagbeanspruchungen treten bekanntlich primär im Bereich zur Rohrachse hin auf. Gegen diese Schlagbeanspruchungen beständiger ist ein metallisches Formstück als ein mineralischer Werkstoff.

Verwendet werden Keramikmaterialien, wie Aluminiumoxidmaterialien (Kalcor), geschmolzener Korund, Zirkon oder dergleichen. Da die Formstücke auch keine Vertiefungen mehr haben, können diese bis zum Verschleiß ihrer vollen Dicke ausgenutzt werden.

Die im Stahlbau üblichen Toleranzen der Konstruktion des Bergerohres (aufgrund des Stahlbaus) wird durch die Elasitzität des Gummis kompensiert.

Bei den (dickeren) räumlich verwundenen Plattenformstücken wird die einvulkanisierte Schiene so eingebracht, daß mindestens 10 mm Gummischicht noch über der Befestigungsschiene verbleibt. Die Befestigung von Platte/Gummiformteil am Stahlmantel kann über eine hammerkopfähnliche Schraube erfolgen, deren Kopf vermittels der anvulkanisierten Schiene im Gummiteil gehalten ist.

Die gekrümmte Platte ist nun über eine Fuge von etwa 10 mm vom Rohrmantel entfernt und wird über eine anvulkanisierte Gummischicht mit einem Schraubenschaft an dem Stahlrohr befestigt. Bestehen die Segmente aus mehreren Formstücken, so können die Fugen rechtwinklig zur Oberfläche der Platte, aber auch schräg oder geknickt ausgeführt werden.

Das Heißvulkanisieren kann im Formkasten vorgenommen werden.

Die Technik der Gummi-Metallbindung kann voll ausgenutzt werden, gegebenenfalls auch unter Verwendung des Ty-Ply-Verfahrens.

Die anvulkanisierten Gummiformteile bringen gegenüber der Ausführung von Metall auf Metall "eine erhebliche Geräuschminderung".

Das Gesamtgewicht der Wendel ist geringer als bei bisherigen Wendelkonstruktion. Dies führt zur Erleichterung bei Transport und Montage. Die horizontal mit dem Rohrschuß abschließende Wendel erlaubt es, die Schüsse leicht auszuwechseln, ohne die Verschleißschutzplatten aus- und einzubauen, was eine ganz erhebliche Erleichterung und durch die kürzeren Ausfallzeiten auch kostengünstig ist.

Andere Befestigungsmethoden der im Gummiformteil einvulkanisierten Bolzen am Stahlrohr sind ohne weiteres möglich.

Die Anordnung der verschiedenen Formstücke in der Wendel ist so getroffen, daß durch die anvulkanisierten Gummiformteile die Verbindung von der mineralischen Verschleißschutzplatte zum Stahlrohr immer gewährleistet ist.

Die Ausführung mit Schienen, hammerkopfähnlichen Schrauben und Befestigung im Mantel von außen vermittels einer Mutter ist immer an den Stellen möglich, wo sich das mineralische Formstück von der senkrechten Stahlwand nach innen hin fortkrümmt.

Durch das Überdecken der Schiene mittels einer Gummischicht zur Rohrwand hin, ist es möglich, den Anpreßdruck an der Rohrwand zu variieren. Kleine Höhenunterschiede der Lauffläche zwischen den einzelnen Formstücken können damit korrigiert werden.

Wo das mineralische Formstück der Rundung des Stahlrohrs entspricht, ergibt sich die erwähnte gleichbleibend dicke Fuge. Diese wird mit einem aufzuvulkanisierenden Gummiteil ausgefüllt. Hier erfolgt die Befestigung durch das Einvulkanisieren eines Schraubenschaftes selbst. Der Schraubenschaft ist mit der tellerförmigen Stahlplatte verschweißt. Dadurch ergibt sich eine Vergrößerung der einzuvulkanisierenden Fläche und damit eine feste Verbindung.

Die Schaubenschäfte werden bei der Montage der Spirale durch die im Mantel vorgesehen Löcher gesteckt und von außen mit einer Mutter befestigt.

Außen am Stahlmantel werden Zahnscheiben/Unterlegscheiben angeordnet.

Vorzugsweise sind im Mantel Löcher mit einem größeren Durchmesser als dem der Schraubenschäfte angeordnet, vorzugsweise als dem Verlauf der Wendel folgende Langlöcher. Sie erlauben dadurch evtl. erforderlich werdende Korrekturen zur Anpassung der Verschleißschutzelemente untereinander. Zusätzliche Korrekturmöglichkeiten werden in dem stark gebogenen Formstück im Bereich des Hammerkopfs und der einvulkanisierten Schiene gefunden.

Bei Einsatz der erfindungsgemäßen Maßnahme bei größeren Rohren mit Wendeleinbauten werden die Gummiformteile durch einvulkanisierte Stege oder eine Armierung von netzförmig eingelegten Stegen stabilisiert.

Beispielsweise Ausführungsformen der Erfindung sollen nun mit bezug auf die beiliegenden Zeichnungen näher erläutert werden, in denen

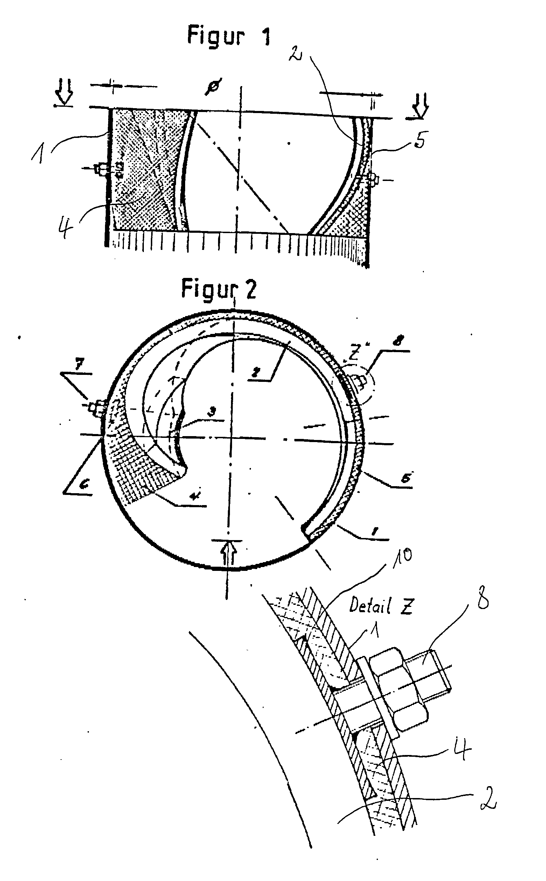

Fig. 1 einen Längsschnitt durch ein Bergefallrohr,

Fig. 2 eine Draufsicht und

Fig. 3 einen Längsschnitt durch ein Bergefallrohr zeigt.

Am aus Stahl bestehenden Bergefallrohr (Stützkonstruktion) 1, der als Träger für die Wendel ausgebildet ist, sind mineralische Verschleißschutzauflagen 2 befestigt. Wegen der zu erwartenden hohen Schlagbeanspruchungen in dem zur Mitte hin liegenden Abschnitt der Wendel können dort Formstücke 3 aus zähem Eisenguß eingesetzt werden. Über ein Gummiformteil 4 wird die stark verwundene nach innen gekrümmte Platte an das Stahlrohr befestigt. Dies kann über eine hammerkopfähnliche Schraube 7 erfolgen. Der Schraubenkopf ist vermittels einer Schiene 6 im Gummiteil gehalten. Die im Normalbereich liegende gekrümmte, insbesondere parallel zum Rohrinnenmantel gekrümmte Platte 2 wird über eine anvulkanisierte Gummischicht vermittels eines Schraubenschaftes 8 am Stahlrohr befestigt. Bestehen die Segmente aus mehreren Formstücken, so können die Fugen rechtwinklig zur Oberfläche der Platte oder auch schräg oder geknickt ausgeführt werden.

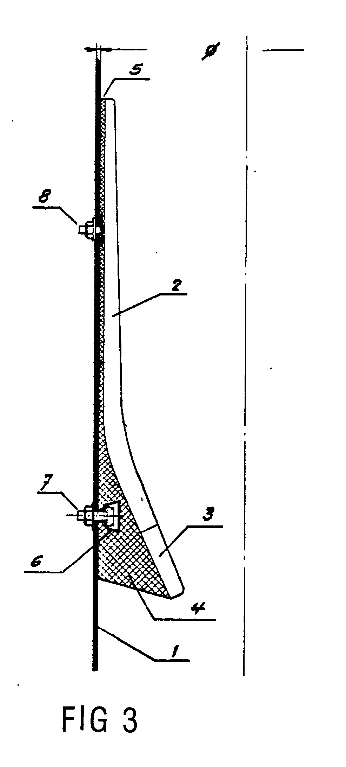

In der Draufsicht der Fig. 2 ist die in der Wendel liegende aus zähem Guß bestehende Platte 3 gut zu sehen, an die der Gummi 4 anvulkanisiert ist, in den die den nicht dargestellten Schraubenkopf haltende Schiene 6 tief einvulkanisiert ist. Im Bereich der Platte 2 können dann mineralische Werkstoffe zum Tragen kommen.

Fig. 3 zeigt lotrechten Schnitt, wobei oben die Platten 2 mit den nach unten stark zur Rohrachse hin gekrümmten Teil sowie Unter "mineralischen Werkstoffen" sind mineralische Guß- oder Sinterwerkstoffe (Warenzeichen "Kalcor" der Firma Schmelzbasaltwerk Kalenborn) insbesondere aus Aluminiumoxid, Zirkonoxid, gegebenenfalls auch Schmelzbasalt zu verstehen.

Bei den "Hartgußwerkstoffen" handelt es sich um Eisengußwerkstoffe.

Im Detail "Z" ist gezeigt, wie ein auf die Platte 2 gesetzter Teller 10 einvulkanisiert ist und mit einem angeschweißten Schraubenschaft vermittels Mutter gegen das Stahlrohr 1 gesichert ist.

## Ansprüche

1. Wendelausbildung, insbesondere in Bergerohren von 500 mm Durchmesser, die aus einzelnen Stahlrohrschüssen bestehen, mit verschleißfesten Auskleidungen, die bodenblechfrei am Stahlrohr befestigt sind, dadurch gekennzeichnet, daß die verschleißfesten Auskleidungen als an sich nicht schlagunempfindliche, aber hochverschleißfeste mineralische Platten und räumlich gekrümmte Plattenstücke ausgebildet sind, die, sich gegen die Rohrwand abstützend, als freitragende Elemente in Gummi einvulkanisiert sind.

2. Wendelausbildung nach Anspruch 1, dadurch gekennzeichnet, daß in die anvulkanisierten Gummiformteile Verbindungselemente, insbesondere Vorrichtungen zum Halten hammerkopfähnlicher Schrauben und Gewindebolzen mit angeschweißten, tellerförmigen Scheiben als Verbindung zum Stahlmantel einvulkanisiert und damit in diesen verankert sind.

3. Wendelausbildung nach einem der vorhergehenden Ansprüche, dadurch gekennzeichnet, daß an den besonders schlagbeanspruchten Bereichen der Wendel Hartgußplatten mit anvulkanisierten Gummiformteilen der in Anspruch 1 und Anspruch 2 genannten Art anbringbar sind.

4. Wendelausbildung nach einem der vorhergehenden Ansprüche, dadurch gekennzeichnet, daß die Schrauben bei stark zum Inneren des Bergerohres hin gekrümmten Platten so tief einvulkanisiert sind, daß über der bergerohrseitigen Begrenzung der Befestigungsschiene (6) noch eine ca. 10 mm dicke Gummischicht zur Korrektur der einzelnen Verschleißschutzelemente (4) verbleibt.

5. Wendelausbildung nach einem der vorhergehenden Ansprüche, dadurch gekennzeichnet, daß die direkt an die Stahlrohrwand (1), insbesondere parallel angrenzenden Platten eine an sie anvulkanisierte Gummischicht (5) mit einvulkanisiertem Schraubenschaft (8) mit tellerförmigem Fuß tragen.

6.Wendelausbildung nach einem der Ansprüche 1 bis 5, dadurch gekennzeichnet, daß die Rückseite der Platten eine für das Anvulkanisieren geeignete Oberflächenausbildung erhalten hat.

7. Wendelausbildung nach einem der vorhergehenden Ansprüche, dadurch gekennzeichnet, daß allgemein Elastomere mit der Plattenrückseite unmittelbar verbunden sind.

8. Wendelausbildung nach einem der vorhergehenden Ansprüche, dadurch gekennzeichnet, daß die Platten und die räumlich gekrümmten Plattenstücke durchbrechungsfrei ausbegildet sind.

# Figur 1

# Figur 2

Detail Z

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 103 315 (BERGWERKSVERBAND GmbH) * Seite 3, Zeilen 1-9; Seite 4, Zeilen 16-18; Seite 5, Zeilen 23-28; Figur 1 * --- | 1 | B 65 G 11/16 B 65 G 11/06 |
| A | DE-A-3 103 316 (BERGWERKSVERBAND GmbH) * Seite 3, Zeilen 1-9; Seite 5, Zeilen 7-12; Figur * --- | 1 | |
| D,A | DE-C-2 923 945 (SCHMELZBASALTWERK KALENBORN KG) * Spalte 1, Zeilen 37-47; Spalte 2, Zeile 55 - Spalte 3, Zeile 12; Figur * --- | 1 | |
| A | DE-A-2 061 554 (TRELLEBORGS GUMMIFABRIKS AB) * Seite 2, Zeilen 4-12; Seite 3, Zeilen 2-7; Figur 1 * --- | 1,3,6,7 | |
| A | US-A-4 367 255 (BLOHM) * Spalte 1, Zeilen 45-52; Spalte 2, Zeilen 43-48; Spalte 3, Zeilen 29-45; Figur 1 * ----- | 2,4,5,7 | **RECHERCHIERTE SACHGEBIETE (Int. Cl.4)** B 65 G E 21 F B 02 C |

Der vorliegende Recherchenbericht wurde für alle Patentansprüche erstellt

| Recherchenort | Abschlußdatum der Recherche | Prüfer |
|---|---|---|
| DEN HAAG | 31-08-1988 | VAN DER ZEE W.T. |